# FASCICULE DE BREVET EUROPEEN

(11) **EP 3 898 157 B1**
(45) Date de publication et mention de la délivrance du brevet: **14.12.2022**
(21) Numéro de dépôt: 19849030.2
(22) Date de dépôt: 20.12.2019
(51) Int. Cl.: B29B 11/16, D03D 25/00, F01D 11/00

(54) **PREFORME AVEC UN RENFORT FIBREUX TISSE EN UNE SEULE PIECE POUR PLATEFORME INTER AUBE**
VORFORM MIT EINTEILIGER FASERVERSTÄRKUNG FÜR ZWISCHENSCHAUFELPLATTFORM
PREFORM WITH ONE-PIECE WOVEN FIBROUS REINFORCEMENT FOR INTER-BLADE PLATFORM

(30) Priorité: 21.12.2018 FR 1873738
(43) Date de publication de la demande: 27.10.2021
(73) Titulaire: SAFRAN, 75015 Paris (FR)
(72) Inventeur: OBERT, Enrico Giovanni, 77550 MOISSY-CRAMAYEL (FR); COUPE, Dominique Marie Christian, 77550 MOISSY-CRAMAYEL (FR); COLOT, Marc-Antoine, 77550 MOISSY-CRAMAYEL (FR); AUBERT, Fabrice Michel François René, 77550 MOISSY-CRAMAYEL (FR); MICHELSEN, Pierre Martin, 77550 MOISSY-CRAMAYEL (FR)
(74) Mandataire: Gevers & Orès
(86) Numéro de dépôt international: PCT/FR2019/053261
(87) Numéro de publication internationale: WO 2020/128397

(56) Documents cités:
- WO-A2-2013/088040
- FR-A1- 2 988 426
- FR-A1- 2 988 427

## Description

### Domaine technique de l'invention

La présente invention concerne le domaine de la fabrication de pièce de turbomachine en matériau composite telle qu'une plateforme inter-aube pour une soufflante de turbomachine.

### Arrière-plan technique

L'art antérieur comprend les documents FR-A1-2 988 427, FR-A1-2 988 426 et WO-A2-2013/088040).

Une turbomachine, et en particulier une turbomachine double flux pour aéronef, comprend de manière générale une soufflante mobile disposée en amont d'un générateur de gaz selon la circulation des gaz dans la turbomachine. La soufflante génère un flux primaire destiné à circuler dans une veine primaire à travers le générateur de gaz et un flux secondaire destiné à circuler dans une veine secondaire autour du générateur de gaz. La soufflante comprend des aubes de soufflante mobiles qui sont portées par un disque de rotor centré sur un axe longitudinal de la turbomachine. Entre chaque aube de soufflante sont agencées des plateformes inter-aubes qui prolongent le cône d'entrée de la soufflante.

Il est connu de réaliser ces plateformes en matériau composite comprenant un renfort fibreux densifié par une matrice de manière à réduire leur masse et à améliorer leur résistances thermomécaniques. Les plateformes en matériau composite comprennent une base aérodynamique qui permet de constituer une portion d'une paroi radialement interne d'une veine aérodynamique d'entrée d'air entre deux aubes de soufflante pour guider le flux d'air entrant dans la turbomachine, et d'autre part d'en assurer l'étanchéité pendant le fonctionnement de la turbomachine en évitant la circulation du flux d'air entrant vers l'intérieur du disque de rotor. Les plateformes en matériau composite comprennent également une structure de fixation de manière à ce que les plateformes inter-aubes soient montées solidaires en rotation sur le disque de rotor. La structure de fixation comprend pour cela une bride radiale amont qui est fixée sur une bride d'une virole amont et d'une bride radiale aval fixée sur une bride d'un tambour aval de manière à limiter les déplacements radiaux et de celles-ci et les pertes de performances aérodynamiques. Les fixations sont réalisées généralement par des tiges et/ou boulons au niveau des brides. Alternativement, les brides amont et aval sont contraintes par contact avec respectivement la virole amont et le tambour aval.

Les plateformes inter-aubes et notamment la structure de fixation subissent des contraintes importantes, notamment les efforts centrifuges lors de la rotation de la turbomachine, qui peuvent conduire à la rupture de ces attaches et à l'éjection de la plateforme inter-aube dans la turbomachine et donc générer la destruction de certaines parties de la turbomachine. De même, les plateformes étant montées de manière à couvrir les pieds des aubes de soufflante et ayant une section axiale générale de forme tronconique, celles-ci augmentent le rapport de moyeu de la soufflante entre l'entrée et la sortie de la soufflante qui peut pénaliser les performances de la turbomachine. Le rapport de moyeu est le quotient entre le diamètre à l'extrémité radiale interne des aubes de soufflante mesuré au bord d'attaque de l'aube de soufflante et le diamètre à l'extrémité radiale externe des aubes mesuré au bord d'attaque des aubes.

La présente invention a notamment pour objectif de fournir une solution simple et efficace permettant d'assurer la tenue mécanique d'une plateforme inter-aube en matériau composite sur un disque de turbine sous l'effort centrifuge tout en améliorant les performances de la turbomachine.

### Résumé de l'invention

On parvient à cet objectif conformément à l'invention grâce à une préforme avec un renfort fibreux tissé en une seule pièce par un tissage tridimensionnel pour la réalisation d'une plateforme inter-aube de soufflante, la plateforme inter-aube comprenant une base aérodynamique s'étendant suivant un axe longitudinal et une structure de fixation comprenant des éléments raidisseurs qui s'étendent depuis la base aérodynamique suivant un axe transversal, la préforme comprenant :
- une première partie fibreuse destinée à former la base aérodynamique,
- une deuxième partie fibreuse destinée à former au moins en partie les éléments raidisseurs de la plateforme inter-aube,
- une première zone de liaison dans laquelle les première et deuxième parties sont tissées conjointement, et
- une première zone de déliaison délimitée par une première ligne de déliaison s'étendant suivant une direction transversale et dans laquelle les première et deuxième parties sont séparées l'une de l'autre, la première zone de déliaison étant adjacente à la première zone de liaison suivant une direction longitudinale.

Ainsi, cette solution permet d'atteindre l'objectif susmentionné. En particulier, cette préforme d'une part, est facile à fabriquer en une seule pièce pour former une base et des raidisseurs en-dessous de la base et d'autre part, permet de répondre efficacement à la tenue mécanique de la plateforme sur le disque de rotor (de soufflante) sous l'effort centrifuge tout en étant léger. Les déliaisons permettent de former les éléments raidisseurs qui n'occupent pas un espace important en-dessous de la base aérodynamique mais tout en permettant d'assurer sa fonction de raidisseur et de fixation rigide sur le disque de rotor. Cette préforme permet également d'obtenir des plateformes avec des éléments raidisseurs de forme générale en I ou Y par exemple qui permettent de réduire le rapport de moyeu de la soufflante ce qui améliore les performances de la turbomachine. Enfin, une telle configuration permet d'éviter l'utilisation systématique d'un élément rapporté (rigide ou en préforme fibreuse) appelé « gap filler » qui est destiné à être placé entre la première partie fibreuse formant la base aérodynamique et un des éléments raidisseurs pour combler certains espaces et assurer un taux volumique acceptable des fibres dans les rayons.

La préforme comprend également l'une ou plusieurs des caractéristiques suivantes, prises seules ou en combinaison :
- les éléments raidisseurs s'étendent depuis la base aérodynamique suivant un axe radial et sensiblement au niveau d'une partie médiane de la base aérodynamique suivant l'axe longitudinal, les éléments raidisseurs s'étendant également suivant un axe transversal Y perpendiculaire aux axes radial et longitudinal,
- la préforme comprend une deuxième zone de déliaison délimitée au moins par une deuxième ligne de déliaison s'étendant suivant la direction transversale perpendiculaire à la direction longitudinale et dans laquelle les première et deuxième parties sont séparées l'une de l'autre, la deuxième zone de déliaison étant adjacente à la première zone de liaison suivant la direction longitudinale,
- la première zone de déliaison et la deuxième zone de déliaison s'étendent dans un même plan,
- la première et la deuxième lignes de déliaison délimitent la première zone de liaison, la deuxième partie fibreuse étant séparée le long des première et deuxième lignes de liaison de manière à former une première structure et une deuxième structure, les première et deuxième structures étant destinées à former un premier et un deuxième bras des éléments raidisseurs,
- la préforme comprend une deuxième zone de déliaison délimitée entre une quatrième et une cinquième ligne de déliaison s'étendant dans un même premier plan et chacune suivant la direction transversale perpendiculaire à la direction longitudinale et dans laquelle la deuxième partie fibreuse est séparée en une première structure fibreuse et une deuxième structure fibreuse séparées l'une de l'autre suivant la zone de déliaison, les première et deuxième structures étant destinées à former un premier et un deuxième bras des éléments raidisseurs,
- la première zone de déliaison s'étend dans un deuxième plan distinct du premier plan, les premier et deuxième plans étant superposés suivant une direction radiale perpendiculaire à la direction longitudinale,
- la première structure fibreuse et la deuxième structure fibreuse sont tissées conjointement avec la première partie fibreuse dans la première zone de liaison,
- la première structure fibreuse et la deuxième structure fibreuse sont tissées conjointement dans une troisième zone de liaison,
- la première partie fibreuse présente une longueur supérieure, suivant la direction longitudinale, à celle des première et deuxième structures fibreuses,
- chaque première partie et deuxième partie comprend une pluralité de fils de chaine et de fils de trame liées entre eux.
- des fils du renfort fibreux comprennent des fibres de carbone, des fibres de verre, des fibres de céramique, des fibres de kevlar, des fibres de polyamide ou un mélange de ces fibres, et
- la première zone de déliaison s'étend entre le premier bord et la première ligne de déliaison et la première zone de liaison s'étend entre le deuxième bord et la première ligne de liaison.

L'invention concerne également un procédé de fabrication d'une plateforme inter-aube de soufflante en matériau composite, le procédé comprenant les étapes suivantes :
- tissage d'une pluralité de fils pour la réalisation d'une préforme en une seule pièce présentant l'une quelconque des caractéristiques précédentes,
- mise en forme de la préforme au moins par dépliage de la deuxième partie fibreuse par rapport à la première ligne de déliaison, et
- injection d'une matrice dans une enceinte d'injection de manière à densifier la préforme mise en forme.

Le procédé de fabrication de la préforme comprend également l'une ou plusieurs des caractéristiques suivantes, prises seules ou en combinaison :
- l'étape de tissage est réalisé à plat,
- les première et deuxième parties sont tissées dans la même direction,
- le procédé comprend une étape de mise en place de la préforme dans une enceinte d'injection d'un moule d'injection,
- le procédé comprend une étape de compactage de la matrice et de la préforme,
- le procédé comprend une étape de chauffage du moule d'injection de manière à solidifier la matrice,
- le procédé comprend une étape de démoulage de la plateforme inter-aube obtenue,
- le procédé comprend une étape d'usinage de la préforme finale obtenue, et
- l'étape d'usinage comprend le perçage d'au moins un orifice dans une chape de fixation de la plateforme.

L'invention concerne également une plateforme inter-aube de turbomachine en matériau composite comprenant un renfort fibreux densifié par une matrice, la plateforme inter-aube étant réalisée par le procédé présentant l'une quelconque des étapes et/ou caractéristiques ci-dessus, la plateforme comprenant une base aérodynamique s'étendant suivant une direction longitudinale et présentant une surface radialement externe destinée à former une portion d'une paroi radialement interne d'une veine aérodynamique d'entrée d'air et une structure de fixation configurée de manière à permettre une fixation de la plateforme sur un disque de rotor.

Ainsi, une telle plateforme permet de respecter les exigences fonctionnelles de maintien des aubes et de tenue mécanique sur le disque de rotor de soufflante, et d'assurer grâce à un renfort fibreux tissé en trois dimension une simplification de la fabrication avec une technologie composite (tissé 3D injecté). Cette plateforme permet également de réduire considérablement l'espace entre l'entrée de la veine aérodynamique en amont du cône d'entrée et la dent du disque de rotor ce qui influe également de manière positive sur la réduction du rapport de moyen de la soufflante et un gain de performance de la turbomachine.

La plateforme comprend également l'une ou plusieurs des caractéristiques suivantes, prises seules ou en combinaison :
- les éléments raidisseurs présentent une section axiale en forme de Y,
- les éléments raidisseurs et la base de la plateforme présentent une section axiale en forme de T,
- les élément raidisseurs et la base de la plateforme présentent une section axiale en forme de π,
- la structure de fixation comprenant une bride radiale amont et une bride radiale aval,
- la bride radiale amont comprend une collerette s'étendant suivant l'axe longitudinale et formée par un bord tombé prononcé,
- les éléments raidisseurs comprennent au moins un chape de fixation sur un disque de rotor de la turbomachine,
- la chape de fixation et le renfort fibreux s'étendent radialement, la chape de fixation étant destinée à être fixée sur le disque de rotor de manière à s'étendre parallèlement à la direction de chargement.

L'invention concerne également une turbomachine comprenant une plateforme inter-aube présentant l'une quelconque des caractéristiques susmentionnées.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
[Fig. 1] La figure 1 est une vue en coupe axiale d'une turbomachine double flux selon l'invention ;
[Fig. 2] La figure 2 représente en perspective un exemple de plateforme destinée à être installée entre au moins deux aubes de soufflante adjacentes autour d'un disque de rotor selon l'invention ;
[Fig. 3] La figue 3 représente un autre mode de réalisation d'une plateforme destinée à être installée entre deux aubes de soufflante adjacentes autour d'un disque de rotor selon l'invention ;
[Fig. 4] La figure 4 illustre un exemple de réalisation d'une préforme avec un renfort fibreux tissé en une seule pièce par un tissage tridimensionnel pour la réalisation d'une plateforme inter-aube, la préforme comprenant une déliaison ; [Fig. 5] La figure 5 illustre de manière schématique une plateforme de renfort fibreux tissé selon l'exemple de la figure 4 et mise en forme de manière qu'une portion de tissu formant des éléments raidisseurs s'étendent sensiblement radialement depuis une partie de tissu s'étendant suivant une direction générale longitudinale ;
[Fig. 6] La figure 6 est une vue très schématique et en coupe axiale d'un exemple de moule d'injection dans lequel la préforme mise en forme selon la figure 5 est installée et densifiée ;
[Fig. 7] La figure 7 illustre un autre exemple de réalisation d'une préforme avec un renfort fibreux tissé en une seule pièce par un tissage tridimensionnel pour la réalisation d'une plateforme inter-aube, la préforme comprenant deux déliaisons ;
[Fig. 8] La figure 8 illustre de manière schématique une plateforme de renfort fibreux tissé selon l'exemple de la figure 7 et mise en forme de manière que des portions de tissu formant des éléments raidisseurs s'étendent radialement depuis une partie de tissu s'étendant suivant une direction générale longitudinale ; et,
[Fig. 9] La figure 9 illustre un autre exemple de réalisation d'une préforme avec un renfort fibreux tissé en une seule pièce par un tissage tridimensionnel pour la réalisation d'une plateforme inter-aube, la préforme comprenant deux déliaisons et étant tissé à plat.

### Description détaillée de l'invention

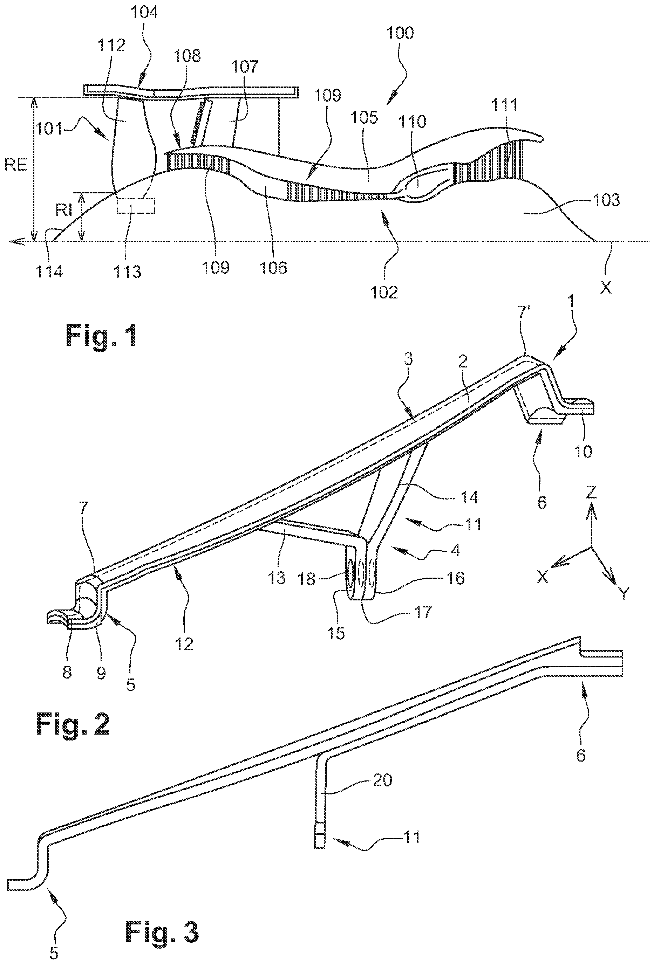

La figure 1 illustre une turbomachine 100 pour aéronef à laquelle s'applique l'invention. Cette turbomachine 100 est ici une turbomachine double flux qui s'étend suivant un axe longitudinal X. Bien entendu, l'invention peut s'appliquer à d'autres types de turbomachine.

La turbomachine 100 comprend une soufflante 101 agencée en amont d'un générateur de gaz 102. Dans la présente invention, et de manière générale, les termes « amont » et « aval » sont définis par rapport à la circulation des gaz dans la turbomachine et ici suivant l'axe longitudinal de la turbomachine. Le générateur de gaz 102 est logé autour d'un carter intérieur annulaire 103 tandis que la soufflante est logée dans un carter extérieur annulaire 104. Ces carters intérieur et extérieur 103, 104 sont séparés par un carter inter-veine annulaire 105 de manière à délimiter une veine primaire 106 et une veine secondaire 107. Le carter inter-veine 105 porte un bec de séparation 108 annulaire séparant la veine primaire de la veine secondaire.

La soufflante 101 génère un flux primaire destiné à circuler dans la veine primaire 106 traversant le générateur de gaz et un flux secondaire qui circule dans la veine secondaire 107 autour du générateur de gaz. Le générateur de gaz 102 comprend d'amont en aval en aval un ensemble de compresseur 109, une chambre de combustion 110, et un ensemble de turbine 111. De manière générale, la soufflante 101 comprend des aubes de soufflante 112 avec chacune une extrémité libre en regard du carter extérieur 104 de manière d'une part, à assurer une première compression du flux d'air incident dans la turbomachine qui est dirigé vers la veine primaire et d'autre de part, d'entraîner le débit d'air qui passe dans la veine secondaire afin de fournir une composante non négligeable de la poussée. Le flux primaire circulant dans la veine primaire est classiquement comprimé par un ou des étages de l'ensemble de compresseur avant d'entrer dans la chambre de combustion. L'énergie de combustion est récupérée par un ou des étages de l'ensemble de la turbine qui participent à l'entraînement des étages de compresseur et de la soufflante.

Le module de soufflante comprend des aubes de soufflantes 112 s'étendant radialement depuis un disque de rotor 113 (représenté schématiquement) solidaire d'un arbre de soufflante qui le traverse et qui est centré sur l'axe longitudinal X. Les termes « intérieur », « extérieur », « radial » et « radialement » sont définis par rapport à un axe radial Z lequel est perpendiculaire à l'axe longitudinal X de la turbomachine. L'arbre de soufflante est entraîné en rotation par un arbre basse pression via un mécanisme de transmission de puissance non représenté. Le disque 113 comprend une pluralité de rainures qui sont réparties régulièrement sur la périphérie du disque et qui s'étendent sensiblement suivant l'axe longitudinal. Les pieds des aubes de soufflante sont implantés chacun dans une rainure. Cette dernière présente un profil complémentaire à celui du pied de l'aube (par exemple en forme de sapin). Les rainures forment entre elles des dents qui s'étendent sensiblement suivant l'axe longitudinal, et avantageusement le long du disque de rotor. En d'autres termes, une dent est délimitée et formée par deux rainures adjacentes circonférentiellement.

En référence à la figure 2, le module de soufflante est également équipé de plusieurs plateformes 1 inter-aubes qui sont agencées chacun, au moins, entre deux aubes de soufflante 112 adjacentes au niveau du disque de rotor 113 et auxquelles nous nous intéressons plus particulièrement. Chaque plateforme 1 inter-aube comprend une base aérodynamique 2 s'étendant suivant l'axe longitudinal (dans une situation d'installation de la plateforme dans la turbomachine). Dans la suite de la description, nous considérons que la plateforme 1 est montée dans le module de soufflante. La base aérodynamique 2 comprend une surface radialement externe 3 destinée à former une portion d'une paroi radialement interne d'une veine d'entrée aérodynamique. Le flux d'air d'entrée est guidé entre les aubes de soufflante 112 dans la veine d'entrée aérodynamique. Cette dernière est prolongée vers l'aval par la veine primaire 106 de la turbomachine. Chaque plateforme 1 inter-aube comprend en outre une structure de fixation 4 permettant la fixation de celle-ci sur le disque de rotor 113. Cette structure de fixation 4 s'étend au moins en partie radialement en-dessous de la base aérodynamique 2 et permet en outre d'une part, de rigidifier la base aérodynamique 2 et d'autre part, de répartir les efforts centrifuges sur plusieurs éléments de manière à réduire les contraintes et d'assurer la tenue mécanique. Dans la suite de la description, une seule plateforme est décrite, il est entendu que toutes les plateformes inter-aubes présentent la même configuration.

La structure de fixation 4 comprend une bride radiale amont 5 et une bride radiale aval 6 qui sont situées respectivement à une extrémité longitudinale 7, 7' de la base aérodynamique 2. Les brides radiales amont et aval 5, 6 sont opposées suivant l'axe longitudinal X. La bride radiale amont 5 permet une fixation sur une bride amont d'une virole amont (non représentée) qui est fixée au disque de rotor. La bride radiale amont 5 comprend une collerette 8 qui s'étend sensiblement suivant l'axe longitudinal (vers l'amont) depuis l'extrémité 9 de la bride radiale 5. La collerette 8 est ici avantageusement formée par un bord tombé très prononcé. En particulier, la bride radiale amont 5 est destinée à prendre appui contre une paroi radiale de la dent du disque et le long de celle-ci radialement. La collerette 8 est destinée à venir en appui contre un épaulement de la virole amont de manière à assurer une rétention radiale de la plateforme 1 inter-aube. En particulier, la collerette 8 vient en-dessous de l'épaulement de la virole amont. Cette dernière est enveloppée au moins en partie par un cône d'entrée 114 (cf. figure 1) de la soufflante qui guide le flux d'air entrant vers les aubes de la soufflante 112. La surface radialement externe de la plateforme 3 présente une continuité de surface avec la surface externe du cône d'entrée.

Quant à la bride radial aval 6 celle-ci permet une fixation sur une bride aval d'un tambour (non représenté) qui est fixé sur le disque de rotor. La bride radiale aval 6 comprend également une collerette 10 qui s'étend suivant l'axe longitudinal (vers l'aval) depuis l'extrémité de la bride radiale aval 6. La collerette 10 est également formée avantageusement par un bord tombé et qui vient en appui en-dessous de la bride aval du tambour pour assurer une rétention radiale de la plateforme inter-aube.

Les deux brides radiales amont et aval 5, 6 constituent alors deux points d'appui de la plateforme 1 inter-aube, qui lorsque celle-ci est soumise à l'effort centrifuge, est maintenue radialement en place par le contact avec la virole amont et le tambour aval.

Comme nous pouvons également le voir sur la figure 2, la structure de fixation 4 est complétée par des éléments raidisseurs 11 qui s'étendent sensiblement radialement depuis une surface radialement interne 12 de la plateforme 1 inter-aube. La surface radialement interne 12 est opposée à la surface radiale externe 3 suivant l'axe radial. Les éléments raidisseurs 11 sont agencés au niveau d'une partie médiane de la plateforme inter-aube. Ces éléments raidisseurs 11 s'étendent suivant un axe transversal Y. Cet axe transversal est perpendiculaire au axes longitudinal et radial comme cela est illustré sur la figure 2. Les éléments raidisseurs 11 permettent de rigidifier la base aérodynamique 2 sans occuper au moins l'espace en dessous de la partie amont de la plateforme inter-aube.

Les éléments raidisseurs 11 et la plateforme 1 inter-aube (avec la base 2 et les brides radiales 5, 6 ) sont formés d'une seule pièce.

Une telle configuration de la structure de fixation 4 (notamment le fait que celle-ci soit sensiblement au milieu de la base 2 axialement) permet de réduire le rapport de moyeu RE (illustré sur la figure 1). En effet, la collerette 8 présente une épaisseur (ici suivant l'axe radial telle qu'illustrée sur la figure 2) qui est réduite. Les efforts que celle-ci doit supporter sont moins importants par rapport à une structure de fixation classique de type caisson (brides radiales amont et aval). Ce genre de structure de fixation classique occupe de la place en-dessous de la collerette et/ou implique l'augmentation de l'épaisseur radiale de la collerette. Dans la présente invention, les termes « axial » et « axialement » sont définis par rapport à l'axe longitudinal X.

Sur l'exemple représenté de la figure 2, les éléments raidisseurs 11 présentent une section axiale ou une forme générale sensiblement en Y. En particulier, les éléments raidisseurs 11 comprennent un premier bras 13 raccordé à la base 2. Les éléments raidisseurs 11 comprennent encore un deuxième bras 14 raccordé à la base 2. Le premier bras 13 comprend une première jambe radiale 15 qui est fixée à une deuxième jambe 16 du deuxième bras 14. Les première et deuxième jambes forment une chape de fixation 17 au disque de rotor. La chape de fixation 17 s'étend radialement. Les premier et deuxième bras 13, 14 forment les deux branches du Y et chacun un point de contact avec la base aérodynamique 2. Les première et deuxième jambes 15, 16 forment le pied du Y. Les premier et deuxième bras 13, 14 permettent de transférer les efforts centrifuges vers la chape de fixation 17 fixée au disque de rotor. La chape de fixation 17 comprend un orifice 18 traversant la paroi de part et d'autre suivant l'axe longitudinal. Des éléments de fixation tels qu'un pion ou une goupille sont reçus à travers l'orifice pour fixer la plateforme inter-aube sur le disque de rotor 113.

Dans un autre mode de réalisation illustré sur la figure 3, les éléments raidisseurs 11 s'étendent sensiblement radialement depuis la base aérodynamique 2. Dans cet exemple de réalisation, la base aérodynamique 2 et les éléments raidisseurs 11 présentent une section axiale ou une forme générale sensiblement en T. En d'autres termes, les éléments raidisseurs 11 comprennent un seul bras 20 qui s'étend radialement depuis la base aérodynamique 2 de la plateforme inter aube.

Suivant encore un autre mode de réalisation non illustré, les éléments raidisseurs 11 s'étendent radialement depuis la base aérodynamique 2. Dans cet exemple, les éléments raidisseurs 11 et la base aérodynamique 2 présentent une section axiale ou une forme générale sensiblement en π (Pi). En particulier, les éléments raidisseurs 11 comprennent un premier et un deuxième bras s'étendant radialement depuis la base (comme pour le mode de réalisation de la figure 2). Ceux-ci sont espacés l'un de l'autre cependant. Il n'y a pas de jonction à l'extrémité libre de chaque premier et deuxième bras. Dans ce cas, chaque extrémité libre des premier et deuxième bras comprend un orifice traversant pour recevoir des éléments de fixation.

Dans ces exemples de réalisation, la plateforme 1 inter-aube est réalisée dans un matériau composite avec un renfort fibreux noyé dans une matrice. En particulier, la plateforme 1 est obtenue par la fabrication d'une préforme 30 réalisée dans un tissage tridimensionnel (ou tissage 3D) de fils pour obtenir le renfort fibreux. Dans la présente invention, nous entendons par l'expression «tissage tridimensionnel » ou « tissage 3D » un mode de tissage dans lequel des fils de chaîne sont liés à des fils de trames sur plusieurs couches.

En particulier, le procédé de fabrication d'une pièce de turbomachine telle qu'une plateforme inter-aube de turbomachine comprend les étapes suivantes :
- un tissage d'une pluralité de fils pour la réalisation d'une préforme avec un renfort fibreux en trois dimensions,
- un découpage facultatif des bords du renfort fibreux de manière que le contour de la préforme soit le plus proche souhaité de celui de la plateforme inter-aube,
- un mouillage dans lequel le renfort fibreux de la préforme est humidifié, par exemple par de l'eau, de façon à ce que celui-ci soit plus facile à manipuler et notamment pour changer l'orientation des fils de chaîne par rapport au fil de trame (décadrage),
- une mise en forme de la préforme dans laquelle un opérateur déplace les fils de manière à mettre en forme le renfort fibreux au profil de la plateforme souhaitée,
- un séchage de la préforme dans lequel l'eau ayant servi au mouillage est extraite de celle-ci. La préforme se rigidifie après séchage et maintient la mise en forme réalisée par l'opérateur. Cette étape peut être réalisée par un chauffage du renfort fibreux dans une enceinte adaptée.
- injection d'une matrice selon la technologie RTM, cet acronyme signifiant en anglais Resin Transfert Moulding pour moulage par transfert de résine, afin d'y réaliser une densification de la préforme et obtenir la plateforme inter-aube souhaitée. La matrice permettant une densification du renfort fibreux peut être une matrice polymérique telle qu'une résine thermodurcissable à base d'époxy. La matrice polymérique peut encore être une résine thermoplastique. Nous obtenons une pièce rigide après un durcissement ou polymérisation de la matrice.
- éventuellement, un usinage de la plateforme obtenue est réalisé en fin de procédé.

Nous nous intéressons plus particulièrement aux étapes de tissage tridimensionnel de la préforme 30 en une seule pièce et de la mise en forme de celle-ci. Le tissage de la préforme est réalisé au moyen d'un métier à tisser configuré au tissage tridimensionnel. Le tissage est avantageusement réalisé à plat et la préforme obtenue présente également une forme générale plate avec des épaisseurs qui varient. Les fils utilisés comprennent des fibres de carbone, de kevlar, de polyamide, de céramique, d'alumine ou encore un mélange de ces fibres. De manière avantageuse, les fils de chaîne et de trame comprennent des fibres de carbone. Pour faciliter la mise en forme ultérieure de la préforme (hormis l'étape de mouillage qui permet de déplacer les fils entre eux), la préforme 30 comprend plusieurs parties fibreuses qui comprennent des zones de liaison et des zones de déliaison qui sont réalisées lors du tissage. Les parties de la préforme 30 comprennent chacune plusieurs couches de fils ou couches fibreuses tissées entre elles.

Nous entendons dans la présente description par le terme « déliaisons » des zones formées volontairement par des couches de fils qui ne sont pas liées ou tissées entre elles localement. Les déliaisons permettent notamment de pouvoir déplier ou écarter des couches ou parties fibreuses par rapport à d'autres couches ou parties fibreuses adjacentes au niveau des zones de déliaison.

Dans le présent exemple de réalisation, les fils de chaîne de la préforme 30 présentent une direction sensiblement parallèle à l'axe longitudinal (suivant la longueur de la base aérodynamique) et les fils de trame présentent une direction sensiblement parallèle à l'axe transversal. De manière alternative, la direction des fils de trame est parallèle à l'axe transversal et la direction des fils de trame est parallèle à l'axe longitudinal. Bien entendu, les direction des fils de chaine sont perpendiculaires aux directions de fil de trame.

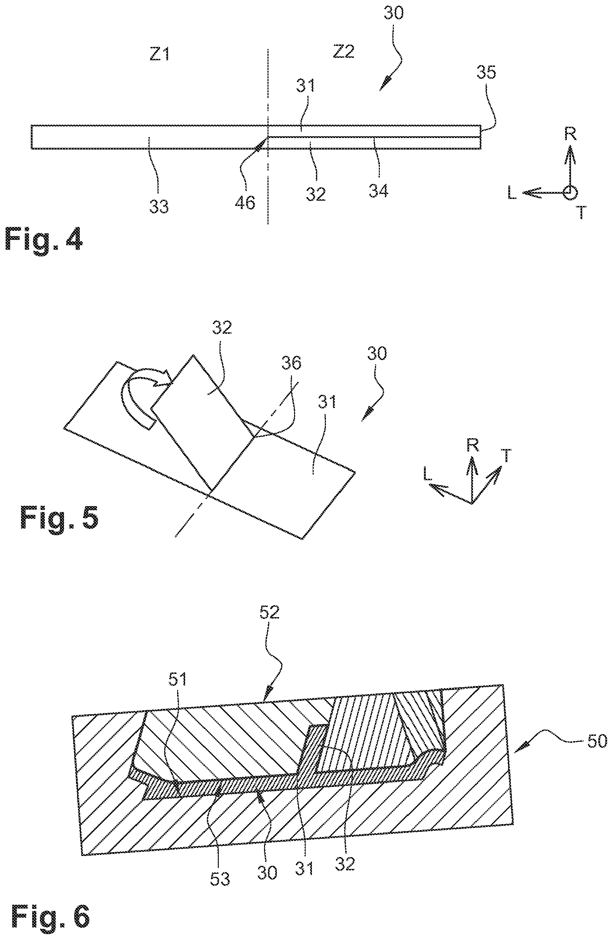

Les figures 4 à 9 représentent schématiquement des préformes avec des renforts fibreux tissés en une seule pièce permettant d'obtenir différentes plateformes inter-aubes telles que décrites ci-dessus. La préforme 30 présente une forme générale parallélépipédique (ici parallélépipédique rectangulaire). Dans la description de la préforme, nous employons les expressions direction longitudinale, direction radiale et direction transversale pour définir les dimensions de celle-ci.

En référence à la figure 4, la préforme 30 comprend une première partie fibreuse 31 et une deuxième partie fibreuse 32 permettant d'obtenir une plateforme 1 inter-aube et des éléments raidisseurs 11 avec la section axiale en forme de T tel qu'illustré sur la figure 3. La première et la deuxième parties fibreuses 31, 32 sont tissées à plat. La première partie fibreuse 31 est destinée à former la base aérodynamique 2 de la plateforme 1 inter-aube tandis que la deuxième partie fibreuse 32 est destinée à former les éléments raidisseurs 11. La première partie et la deuxième parties 31, 32 s'étendent suivant la direction longitudinale L sur la figure 4. Toutes les couches supérieures (par rapport à la direction radiale R perpendiculaire à la direction longitudinale) de la première partie 31 sont continues de manière à garantir une bonne tenue mécanique et une continuité de raideur sur la surface radialement externe de la plateforme inter-aube obtenue.

Les première et deuxième parties 31, 32 sont tissées de manière à former au moins une zone de liaison 33 et au moins une zone de déliaison 34. La première partie fibreuse 31 et la deuxième partie fibreuse 32 sont tissées conjointement ou liées entre elles sur une première zone Z1 de la préforme. La première zone Z1 ne comprend donc qu'une couche fibreuse. De même, les première et deuxième parties fibreuses sont déliées dans une deuxième zone Z2 de la préforme 30. En particulier, la première et la deuxième parties 31, 32 sont séparées l'une de l'autre par une déliaison qui s'étend suivant la direction transversale de la préforme 30. La zone de déliaison 34 formée s'étend entre un premier bord 35 et une ligne de déliaison 46 suivant la direction longitudinale de la préforme. D'autre part, la zone de déliaison 34 s'étend entre un premier côté et une deuxième côté opposés suivant la direction transversale. La deuxième zone comprend ici deux couches fibreuses qui sont superposées suivant la direction radiale. La ligne de déliaison 46 est située dans le présent exemple au milieu de la longueur de la préforme suivant la direction longitudinale. Bien entendu, cette ligne de déliaison 46 pourrait être située à une distance différente, telle qu'à un tiers ou deux tiers du premier bord 35.

Sur la figure 5, une portion de la deuxième partie 32 de la préforme 30 est écartée ou dépliée de la première partie 31 de la préforme lors de la mise en forme de celle-ci. L'ouverture ou dépliage de la deuxième partie 32 s'opère à partir du premier bord 35. Nous constatons alors que la deuxième partie 32 est complètement séparée de la première partie au niveau de la ligne de déliaison 46 s'étendant suivant la direction transversale. En revanche, la deuxième partie 32 et la première partie 31 sont complètement tissées conjointement sur toute une première portion de la préforme (première zone Z1). La deuxième partie 32 une fois dépliée forme le seul bras 20 des éléments raidisseurs 11. La préforme 30 suit le reste du procédé de fabrication jusqu'à l'injection de la matrice dans un moule d'injection 50 tel que celui représenté sur la figure 6.

En référence à la figure 6, le moule 50 présente une première empreinte intérieure 51 destinée à accueillir la préforme 30 qui a été mise en forme dans l'étape de mise en forme. L'étape de mise en forme est avantageusement réalisée dans le moule sur la première empreinte 51 qui présente une forme correspondante à celle souhaitée pour la plateforme finale. Le moule 51 est préalablement fermé par un contre-moule 52 comprenant une deuxième empreinte 53. La première et la deuxième empreintes forment un espace d'injection dans lequel une matrice est injectée. La matrice est choisie en fonction de l'application souhaitée, ici pour la plateforme inter aube. La matrice imprègne le renfort fibreux de la préforme avec la deuxième partie fibreuse formant le bras des éléments raidisseurs dans un moule d'injection. La première partie fibreuse est également mise en forme de manière à former les brides amont et aval de la base aérodynamique avant injection de la matrice.

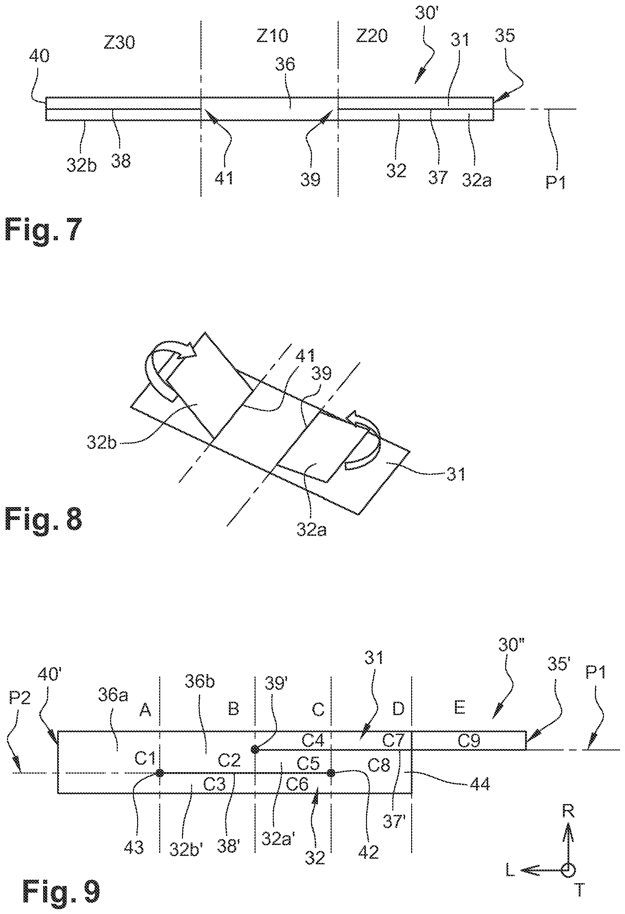

La figure 7 illustre un autre mode de réalisation de préforme 30' destinée à réaliser une plateforme 1 inter-aube et des éléments raidisseurs 11 dont la section axiale a une forme sensiblement en π(pi). La figure 7 représente la préforme 30' tissée à plat avec la première et la deuxième parties 31, 32 s'étendant suivant la direction longitudinale. La première partie fibreuse est destinée à former la base aérodynamique de la plateforme inter-aube tandis que la deuxième partie fibreuse est destinée à former les éléments raidisseurs. Cette préforme 30' se différencie de la préforme 30 décrite en relation avec les figures 4 à 6 en ce que celle-ci comprend deux déliaisons entre les première et les deuxième parties fibreuses. Les déliaisons permettent de séparer la première partie fibreuse de la deuxième partie fibreuse de part et d'autre d'une zone de liaison 36 suivant la direction longitudinale. Ici, la zone de liaison 36 est située dans une zone intermédiaire Z10 de la préforme 30'. Deux zones de déliaison 37, 38 s'étendent respectivement dans une première zone Z20 et une deuxième zone Z30 de la préforme 30'. En particulier, la première zone de déliaison 37 s'étend entre le premier bord 35 et une première ligne de déliaison 39 suivant la direction longitudinale L. La première zone de déliaison 37 s'étend d'autre part entre le premier côté et le deuxième côté opposés de la préforme suivant la direction transversale. La deuxième zone de déliaison 38 s'étend entre un deuxième bord 40 et une deuxième ligne de déliaison 41. D'autre part, la deuxième zone de déliaison 38 s'étend entre le premier côté et un deuxième côté opposés suivant la direction transversale. La zone de liaison 36 est agencée axialement entre les deux zone de déliaison 37, 38. En particulier, la zone de déliaison 36 est délimitée axialement par les première et deuxième lignes de déliaison 39, 41. Dans cet exemple, les deux zones de déliaison s'étendent dans un même plan P1 qui est perpendiculaire à la direction radiale.

La longueur des première et deuxième zones Z20 et Z30 suivant la direction longitudinale est identique. Bien entendu, une autre configuration de ces zones Z20 et Z30 est possible

Par ailleurs, dans la première zone Z20, nous constatons ainsi deux couches fibreuses qui sont superposées suivant la direction radiale. La deuxième zone Z30 comprend également deux couches fibreuses superposées suivant la direction radiale. Enfin, la zone intermédiaire Z10 ne comprend qu'une seule couche fibreuse. Les zones Z30, Z10 et Z20 sont adjacentes suivant la direction longitudinale L.

Lors de la séparation ou dépliage de la préforme 30' comme illustré sur la figure 8, nous obtenons une première structure 32a de la deuxième partie fibreuse complètement séparée de la première partie au niveau de la première ligne de déliaison 39 de manière à former le premier bras des éléments raidisseurs de la préforme. Une deuxième structure 32b de la deuxième partie fibreuse 32 est également complètement séparée de la première portion fibreuse au niveau de la deuxième ligne de déliaison 41 de manière à former le deuxième bras des éléments raidisseurs 11. La préforme 30' mise en forme est densifiée par injection de la matrice dans le moule adapté à la forme de la préforme. Lors de la mise en forme, la première partie fibreuse est également mise en forme de manière à former les brides amont et aval de la base aérodynamique.

Dans cet exemple de réalisation, les première et deuxième structures 32a, 32b de la deuxième portion fibreuse 32 sont tissées dans la même direction. La direction peut être de l'amont vers l'aval ou de l'aval vers l'amont suivant la direction longitudinale de la préforme 30'. De manière alternative, les première et deuxième structures 32a, 32b sont tissées dans des directions opposées. Dans ce cas, la première structure 32a peut être tissée vers l'aval depuis la première la ligne de déliaison 39 tandis que la deuxième structure 32b peut être tissée vers l'amont depuis la deuxième ligne de déliaison 41.

La figure 9 illustre de manière très schématique une préforme 30" destinée à réaliser une plateforme inter-aube et des éléments raidisseurs, les éléments raidisseurs ayant une section axiale de forme sensiblement en Y telle qu'illustré sur la figure 2. La préforme 30" est réalisée sensiblement de la même manière que la préforme 30' illustrée sur les figures 7 et 8. C'est-à-dire que la préforme 30" dans le présent exemple comprend deux déliaisons qui permettent de séparer la deuxième partie fibreuse 32 de la première partie fibreuse 31 et de former en même temps la première structure fibreuse 32a et la deuxième structure fibreuse 32b. Les première et deuxième structures 32a, 32b sont destinées à former respectivement un premier bras 13 et un deuxième bras 14 des éléments raidisseurs 11 de la plateforme inter-aube.

Cette préforme 30" se distingue toutefois de la préforme des figures 30' en ce que les première et deuxième structures 32a, 32b sont jointes entre elles à leurs extrémités de sorte à former la chape de fixation 17 sur le disque de rotor de la soufflante 101. La jonction entre les première et deuxième structures 32a, 32b est obtenue par un tissage conjoint lors de l'étape de tissage tridimensionnel ou une densification lors de l'injection de la matrice dans le moule d'injection (co-injection). Le tissage des première et deuxième structures 32a, 32b conjointement permet d'améliorer la tenue en cisaillement interlaminaire qui découle de l'effort qui sera exercé sur la chape en fonctionnement. Les propriétés mécaniques et la durée de la pièce sont ainsi améliorées.

Dans cet exemple de réalisation, la liaison des deux structures fibreuses 32a, 32b est réalisée par un tissage lors de l'étape de tissage. Ainsi, la préforme 30" comprend une première zone de déliaison 37' qui s'étend entre le premier bord 35' de la préforme 30" et une première ligne de déliaison 39' suivant la direction longitudinale L. La première zone de déliaison 37' s'étend d'autre part entre le premier côté et le deuxième côté opposés de la préforme 30' suivant la direction transversale. La première partie 31 destinée à former la base de la plateforme se sépare de la deuxième partie destinée à former les éléments raidisseurs 11 formant un Y, suivant une déliaison.

Une deuxième zone de déliaison 38' est délimitée entre une quatrième ligne de déliaison 42 et une cinquième ligne de déliaison 43. Les quatrième ligne et cinquième ligne de déliaison 42, 43 s'étendent dans un même plan P2 et chacune suivant une direction transversale perpendiculaire à la direction longitudinale. Dans cette zone de déliaison, la deuxième partie fibreuse 32 est séparée en la première structure fibreuse 32a' et la deuxième structure fibreuse 32b' par une déliaison.

La première et la deuxième zone de déliaison 37' s'étendent dans des plans P1, P2 distincts et parallèles. Les plans P1, P2 se superposent suivant la direction radiale R. De même, des parties de la première et la deuxième zones de déliaison 37', 38' se superposent suivant la direction radiale.

La préforme 30" comprend une zone de liaison 36a où les première et deuxième parties (première et deuxième structures fibreuses) sont tissées conjointement. Cette première zone de liaison 36a s'étend entre le deuxième bord 40' et la cinquième ligne de déliaison 43. Une deuxième zone de liaison 36b s'étend entre le deuxième bord 40' et la première ligne de déliaison 39'. Une troisième zone de liaison 44 (correspondant au tissage des première et deuxième structures pour former la chape de fixation 17) s'étend longitudinalement entre la quatrième ligne de déliaison 42 et le premier bord 35' de la préforme.

Comme cela est illustré, la première partie fibreuse 31 présente une longueur supérieure à celle de la deuxième structure 32 (première et deuxième structure 32a', 32b'). De la sorte, la première partie fibreuse s'étend longitudinalement au-delà de la troisième zone de liaison 44. Cette longueur permettra de former le bride radiale amont lors de la mise en forme de la plateforme.

Afin de pouvoir réaliser ce tissage pour lier les première et deuxième structures 32a', 32b', le renfort fibreux est tissé à plat suivant une direction générale longitudinale. Les première et deuxième structures 32a, 32b destinées à former les bras des éléments raidisseurs 11, ainsi que la première partie fibreuse destinée à former la base 2 sont tissées dans la même direction. Avantageusement, la direction de tissage est parallèle aux fils de chaine et de l'amont vers l'aval suivant la figure 9. De manière alternative, le tissage est réalisé avec des fils de trame et de l'amont vers l'aval.

En considérant la figure 9, la préforme 30" comprend plusieurs zones adjacentes et successives suivant la direction générale longitudinale et de l'amont vers l'aval. Il y a ici cinq zones successives suivant la direction longitudinale référencée A, B, C, D et E. En particulier, la première zone A comprend une première couche fibreuse C1 (une seule couche fibreuse) destinée à former au moins en partie la base aérodynamique et la deuxième zone B comprend deux couches fibreuses, à savoir une deuxième couche fibreuse C2 et une troisième couche fibreuse C3. Ces deuxième et troisième couches fibreuses C2, C3 sont séparées par une déliaison (partie de la zone de déliaison 38'). De la sorte, les deuxième couches et troisième couches sont superposées suivant la direction radiale. La deuxième couche est destinée à former au moins une partie de la base aérodynamique de la plateforme inter-aube. La troisième couche forme en partie les éléments raidisseurs 11.

La troisième zone C comprend trois couches fibreuses, soit une quatrième couche fibreuse C4, une cinquième couche fibreuse C5 et une sixième couche fibreuse C6. Les quatrième, cinquième et sixième couches sont séparées par deux déliaisons. Il s'agit de parties des zones de déliaison 37', 38'. Ces dernières s'étendent dans des plans distincts et parallèles. La quatrième couche fibreuse C4 forme au moins en partie la base aérodynamique. Les cinquième et sixième couches C5, C6 forment au moins en partie les éléments raidisseurs 11.

La quatrième zone D comprend deux couches fibreuses, soit une septième couche fibreuse C7 et une huitième couche fibreuse C8 superposées suivant la direction radiale. Une seule déliaison sépare donc ces deux couches. Il s'agit d'une portion de la zone de déliaison 37'. La septième couche C7 est destinée à former au moins en partie la base aérodynamique 2 et la huitième couche C8 forme au moins en partie les éléments raidisseurs. Cette huitième couche en tissé 3D est destinée à former la liaison à l'extrémité des premier et deuxième bras formant les éléments raidisseurs 11.

Enfin, la cinquième zone E comprend une seule couche. Il s'agit d'une neuvième couche fibreuse qui s'étend suivant la direction générale longitudinale et qui est destinée à former au moins en partie la base aérodynamique.

Ainsi, la préforme est tissée de la zone A à la zone E en réalisant des zones déliaisons pour séparer des couches entre elles.

Lors de la séparation ou dépliage de la préforme 30", nous obtenons une séparation de la première partie et de la deuxième partie au niveau de la première zone de déliaison 37' de manière à former la base 2 et les éléments raidisseurs 11. La deuxième partie est séparée suivant la deuxième zone de déliaison 38' pour former les première et deuxième structures 32a', 32b' destinées à former les premier et deuxième bras tout en ayant un tissage à leurs extrémité pour former la chape de fixation 17. La préforme 30" mise en forme est densifiée par injection de la matrice dans le moule adapté à la forme de la préforme. Lors de la mise en forme, la première partie fibreuse est également mise en forme de manière à former les brides amont et aval de la base aérodynamique. La chape de fixation 17 et l'agencement du renfort fibreux dans cette chape de fixation sont parallèles à la direction du chargement, soit dans la direction radiale, ce qui permet une meilleure tenue mécanique par rapport aux éléments de fixation de l'art antérieur qui s'étendent généralement suivant une direction perpendiculaire à la direction de chargement.

Lorsque les pièces rigides ont été obtenues après densification de la matrice, au moins un perçage est réalisé de manière à former l'orifice 18 de la chape de fixation 17 de la plateforme inter-aube. Avantageusement, un insert métallique (non représenté) de forme annulaire est installé dans l'orifice de la chape. Le montage de l'insert métallique est réalisé par un sertissage. Un tel insert métallique permet de limiter l'usure du matériau composite au niveau de la paroi de l'orifice. La durée de vie de la plateforme est alors garantie.

La première partie fibreuse 31 destinée à former la base aérodynamique de la plateforme peut être tissée suivant un tissage bidimensionnel 2D ou un tissage tridimensionnel.

## Revendications

1. Préforme (30, 30', 30") avec un renfort fibreux tissé en une seule pièce par un tissage tridimensionnel pour la réalisation d'une plateforme (1) inter-aube de soufflante, la plateforme (1) inter-aube comprenant une base aérodynamique (2) s'étendant suivant un axe longitudinal et une structure de fixation (4) comprenant des éléments raidisseurs (11) qui s'étendent depuis la base aérodynamique suivant un axe radial et sensiblement au niveau d'une partie médiane de la base aérodynamique suivant l'axe longitudinal, les éléments raidisseurs (11) s'étendant également suivant un axe transversal Y perpendiculaire aux axes radial et longitudinal, la préforme (30, 30', 30") comprenant :
- une première partie fibreuse (31) destinée à former la base aérodynamique (2) et s'étendant suivant une direction longitudinale L,
- une deuxième partie fibreuse (32) destinée à former au moins en partie les éléments raidisseurs (11) de la plateforme inter-aube,
- une première zone de liaison (33, 36, 36a, 36b) dans laquelle les première et deuxième parties (31, 32) sont tissées conjointement, et
- une première zone de déliaison (34, 37, 37', 38, 38') délimitée par une première ligne de déliaison (46, 39, 39', 41, 43) s'étendant suivant une direction transversale T perpendiculaire à la direction longitudinale et dans laquelle les première et deuxième parties (31, 32) sont séparées l'une de l'autre au moins depuis la première ligne de déliaison de manière à obtenir des éléments raidisseurs présentant une section axiale par rapport à l'axe longitudinal en forme de T, de Y, ou de π avec la base aérodynamique, la première zone de déliaison (34, 37, 37', 38, 38') étant adjacente à la première zone de liaison (33, 36, 36a, 36b) suivant la direction longitudinale L.

2. Préforme (30, 30', 30") selon la revendication précédente, **caractérisée en ce qu'**elle comprend une deuxième zone de déliaison (38) délimitée au moins par une deuxième ligne de déliaison (41) s'étendant suivant la direction transversale et dans laquelle les première et deuxième parties (31, 32) sont séparées l'une de l'autre, la deuxième zone de déliaison (38) étant adjacente à la première zone de liaison (36) suivant la direction longitudinale L.

3. Préforme (30, 30', 30") selon la revendication précédente, **caractérisée en ce que** la première zone de déliaison (37) et la deuxième zone de déliaison (38) s'étendent dans un même plan (P1).

4. Préforme (30, 30', 30") selon la revendication 2 ou 3, **caractérisée en ce que** la première et la deuxième ligne de déliaison (39, 41) délimitent la première zone de liaison (36), la deuxième partie fibreuse (32) étant séparée le long des première et deuxième lignes de liaison de manière à former une première structure (32a) et une deuxième structure (32b), les première et deuxième structures étant destinées à former un premier et un deuxième bras (13, 14) des éléments raidisseurs (11).

5. Préforme (30, 30', 30") selon la revendication 1, **caractérisée en ce qu'**elle comprend une deuxième zone de déliaison (38') délimitée entre une quatrième et une cinquième ligne de déliaison (42, 43) s'étendant dans un même premier plan (P2) et chacune suivant la direction transversale et dans laquelle la deuxième partie fibreuse est séparée en une première structure fibreuse (32a') et une deuxième structure fibreuse (32b') séparées l'une de l'autre suivant la zone de déliaison, les première et deuxième structures étant destinées à former un premier et un deuxième bras (13, 14) des éléments raidisseurs (11).

6. Préforme (30, 30', 30") selon la revendication précédente, **caractérisée en ce que** la première zone de déliaison (37') s'étend dans un deuxième plan (P1) distinct du premier plan (P2), les premier et deuxième plans (P1, P2) étant superposés suivant une direction radiale perpendiculaire à la direction longitudinale.

7. Préforme (30, 30', 30") selon l'une des revendications 5 et 6, **caractérisée en ce que** la première structure fibreuse (32a') et la deuxième structure fibreuse (32b') sont tissées conjointement avec la première partie fibreuse (31) dans la première zone de liaison (36a).

8. Préforme (30, 30', 30") selon l'une des revendications 5 à 7, **caractérisée en ce que** la première structure fibreuse (32a) et la deuxième structure fibreuse (32b) sont tissées conjointement dans une troisième zone de liaison (44).

9. Préforme (30, 30', 30") selon l'une des revendications 5 à 8, **caractérisée en ce que** la première partie fibreuse (31) présente une longueur supérieure, suivant la direction longitudinale, à celle des première et deuxième structures fibreuses (32a, 32b).

10. Procédé de fabrication d'une plateforme (1) inter-aube de soufflante en matériau composite, le procédé comprenant les étapes suivantes :
- tissage d'une pluralité de fils pour la réalisation d'une préforme (30, 30', 30") en une seule pièce selon l'une quelconque des revendications précédentes,
- mise en forme de la préforme au moins par dépliage de la deuxième partie fibreuse par rapport à la première ligne de déliaison, et injection d'une matrice dans une enceinte d'injection de manière à densifier la préforme mise en forme.

11. Procédé selon la revendication précédente, **caractérisé en ce que** l'étape de tissage est réalisée à plat.

12. Procédé selon l'une des revendications 10 et 11, **caractérisé en ce que** les première et deuxième parties (31, 32) sont tissées dans la même direction.

13. Plateforme (1) inter-aube de turbomachine (100) en matériau composite comprenant un renfort fibreux densifié par une matrice, la plateforme (1) inter-aube étant réalisée par le procédé selon l'une quelconque des revendications 10 à 12, la plateforme (1) comprenant une base aérodynamique (2) s'étendant suivant un axe longitudinal et présentant une surface radialement externe (3) destinée à former une portion d'une paroi radialement interne d'une veine aérodynamique d'entrée d'air et une structure de fixation (4) configurée de manière à permettre une fixation de la plateforme sur un disque de rotor (113).

14. Plateforme (1) inter-aube selon la revendication précédente, **caractérisée en ce que** les éléments raidisseurs (11) présentent une section axiale en forme de Y.

15. Plateforme (1) inter-aube selon la revendication 13, **caractérisée en ce que** les éléments raidisseurs (11) et la base (2) de la plateforme présentent une section axiale en forme de T.

16. Plateforme (1) inter-aube selon la revendications 13, **caractérisée en ce que** les raidisseurs et la base (2) de la plateforme présentent une section axiale en forme de π.

## Patentansprüche

1. Vorform (30, 30', 30") mit einer gewebten faserhaltigen Verstärkung aus einem einzigen Stück durch dreidimensionales Weben zur Fertigung einer Zwischenschaufelplattform (1) eines Gebläses, wobei die Zwischenschaufelplattform (1) eine aerodynamische Basis (2) umfasst, die sich entlang einer Längsachse erstreckt, und eine Befestigungsstruktur (4), die Versteifungselemente (11) umfasst, die sich aus der aerodynamsichen Basis entlang einer radialen Achse und im Wesentlichen im Bereich eines mittleren Abschnitts der aerodynamischen Basis entlang der Längsachse erstrecken, wobei sich die Versteifungselemente (11) ebenfalls entlang einer Querachse Y, senkrecht zur radialen und zur Längsachse erstrecken, wobei die Vorform (30, 30', 30") umfasst:
- einen ersten faserhaltigen Teil (31), der dazu bestimmt ist, die aerodynamische Basis (2) zu bilden, und der sich entlang einer Längsrichtung L erstreckt,
- einen zweiten faserhaltigen Teil (32), der dazu bestimmt ist, mindestens teilweise die Versteifungselemente (11) die Zwischenschaufelplattform,
- einen ersten Verbindungsbereich (33, 36, 36a, 36b), in dem der erste und zweite Teil (31, 32) zusammen gewebt werden, und
- einen ersten Entkoppelungsbereich (34, 37, 37', 38, 38'), der durch eine erste Entkoppelungslinie (46, 39, 39', 41, 43) begrenzt ist, die sich entlang einer Querrichtung T, senkrecht zur Längsrichtung erstreckt, und in der der erste und zweite Teil (31, 32) mindestens von der ersten Entkoppelungslinie weg voneinander getrennt sind, um Versteifungselemente zu erhalten, die einen axialen Querschnitt in Bezug auf die Längsachse in Form eines T, eines Y, oder eines π mit der aerodynamischen Basis aufweisen, wobei der erste Entkoppelungsbereich (34, 37, 37', 38, 38') angrenzend an den ersten Verbindungsbereich (33, 36, 36a, 36b) entlang der Längsrichtung L ist.

2. Vorform (30, 30', 30") nach dem vorstehenden Anspruch, **dadurch gekennzeichnet, dass** sie einen zweiten Entkoppelungsbereich (38) umfasst, der mindestens durch eine zweite Entkoppelungslinie (41) begrenzt wird, die sich entlang der Querrichtung erstreckt, und in dem der erste und zweite Teil (31, 32) voneinander getrennt sind, wobei der zweite Entkoppelungsbereich (38) angrenzend an den ersten Verbindungsbereich (36) entlang der Längsrichtung L ist.

3. Vorform (30, 30', 30") nach dem vorstehenden Anspruch, **dadurch gekennzeichnet, dass** sich der erste Entkoppelungsbereich (37) und der zweite Entkoppelungsbereich (38) über eine selbe Ebene (P1) erstrecken.

4. Vorform (30, 30', 30") nach Anspruch 2 oder 3, **dadurch gekennzeichnet, dass** die erste und die zweite Entkoppelungslinie (39, 41) den ersten Verbindungsbereich (36) begrenzen, wobei der zweite faserhaltige Teil (32) entlang der ersten und zweiten Verbindungslinie derart getrennt ist, um eine erste Struktur (32a) und eine zweite Struktur (32b) zu bilden, wobei die erste und zweite Struktur dazu bestimmt sind, einen ersten und einen zweiten Arm (13, 14) der Versteifungselemente (11) zu bilden.

5. Vorform (30, 30', 30") nach Anspruch 1, **dadurch gekennzeichnet, dass** sie einen zweiten Entkoppelungsbereich (38') umfasst, der zwischen einer vierten und einer fünften Entkoppelungslinie (42, 43) begrenzt ist, die sich über eine selbe Ebene (P2) erstrecken, und jeweils der Querrichtung folgen, und wobei der zweite faserhaltige Teil in eine erste faserhaltige Struktur (32a') und eine zweite faserhaltige Struktur (32b') getrennt ist, die voneinander entlang des Entkoppelungsbereichs getrennt sind, wobei die erste und zweite Struktur dazu bestimmt sind, einen ersten und einen zweiten Arm (13, 14) der Versteifungselemente (11) zu bilden.

6. Vorform (30, 30', 30") nach dem vorstehenden Anspruch, **dadurch gekennzeichnet, dass** sich der erste Entkoppelungsbereich (37') über eine zweite Ebene (P1) erstreckt, die sich von der ersten Ebene (P2) unterscheidet, wobei die erste und zweite Ebene (P1, P2) entlang einer radialen Richtung, senkrecht zur Längsrichtung, überlagert sind.

7. Vorform (30, 30', 30") nach einem der Ansprüche 5 und 6, **dadurch gekennzeichnet, dass** die erste faserhaltige Struktur (32a') und die zweite faserhaltige Struktur (32b') zusammen mit dem ersten faserhaltigen Teil (31) in dem ersten Verbindungsbereich (36a) gewebt sind.

8. Vorform (30, 30', 30") nach einem der Ansprüche 5 bis 7, **dadurch gekennzeichnet, dass** die erste faserhaltige Struktur (32a) und die zweite faserhaltige Struktur (32b) zusammen in einem dritten Verbindungsbereich (44) gewebt sind.

9. Vorform (30, 30', 30") nach einem der Ansprüche 5 bis 8, **dadurch gekennzeichnet, dass** der erste faserhaltige Teil (31) eine Länge aufweist, die entlang der Längsrichtung größer als jene der ersten und zweiten faserhaltigen Struktur (32a, 32b) ist.

10. Verfahren zur Herstellung einer Zwischenschaufelplattform (1) eines Gebläses aus Verbundwerkstoff, wobei das Verfahren die folgenden Schritte umfasst:
- Weben einer Vielzahl von Fäden zur Fertigung einer Vorform (30, 30', 30") aus einem Stück nach einem der vorstehenden Ansprüche,
- In-Form-bringen der Vorform mindestens durch Entfalten des zweiten faserhaltigen Teils in Bezug auf die erste Entkoppelungslinie, und Einspritzen einer Matrix in eine Einspritzeinschließung, um die in Form gebrachte Vorform zu verdichten.

11. Verfahren nach dem vorstehenden Anspruch, **dadurch gekennzeichnet, dass** der Schritt des Webens eben ausgeführt wird.

12. Verfahren nach einem der Ansprüche 10 und 11, **dadurch gekennzeichnet, dass** der erste und zweite Teil (31,32) in derselben Richtung gewebt sind.

13. Zwischenschaufelplattform (1) einer Turbomaschine (100) aus Verbundwerkstoff, umfassend eine durch eine Matrix verdichtete faserhaltige Verstärkung, wobei die Zwischenschaufelplattform (1) durch das Verfahren nach einem der Ansprüche 10 bis 12 gefertigt wird, wobei die Plattform (1) eine aerodynamische Basis (2) umfasst, die sich entlang einer Längsachse erstreckt, und eine radial äußere Oberfläche (3) aufweist, die dazu bestimmt ist, einen Abschnitt einer radial inneren Wand eines aerodynamischen Lufteintrittsstroms und eine Befestigungsstruktur (4) zu bilden, die derart konfiguriert ist, um eine Befestigung der Plattform auf einer Rotorscheibe (113) zu ermöglichen.

14. Zwischenschaufelplattform (1) nach dem vorstehenden Anspruch, **dadurch gekennzeichnet, dass** die Versteifungselemente (11) einen axialen Querschnitt in Form eines Y aufweisen.

15. Zwischenschaufelplattform (1) nach Anspruch 13, **dadurch gekennzeichnet, dass** die Versteifungselemente (11) und die Basis (2) der Plattform einen axialen Querschnitt in Form eines T aufweisen.

16. Zwischenschaufelplattform (1) nach Anspruch 13, **dadurch gekennzeichnet, dass** die Versteifungen und die Basis (2) der Plattform einen axialen Querschnitt in Form eines π aufweisen.

## Claims

1. A preform (30, 30', 30") with a fibrous reinforcement woven in one piece by a three-dimensional weaving to create a fan inter-blade platform (1), the inter-blade platform (1) comprising an aerodynamic base (2) extending along a longitudinal axis and a fixing structure (4) comprising stiffening elements (11) which extend from the aerodynamic base along a radial axis and substantially at the level of a median part of the aerodynamic base along the longitudinal axis, the stiffening elements (11) also extending along a transverse axis Y perpendicular to the radial and longitudinal axes, the preform (30, 30', 30") comprising:
- a first fibrous part (31) intended to form the aerodynamic base (2) and extending along a longitudinal direction L,
- a second fibrous part (32) intended to form at least partly the stiffening elements (11) of the inter-blade platform,
- a first connection zone (33, 36, 36a, 36b) in which the first and second parts (31, 32) are woven together, and
- a first disconnection zone (34, 37, 37', 38, 38') delimited by a first disconnection line (46, 39, 39', 41, 43) extending along a transverse direction T perpendicular to the longitudinal direction and in which the first and second parts (31, 32) are separated from one another at least from the first disconnection line so as to obtain stiffening elements having an axial cross-section with respect to the longitudinal axis shaped like a T, Y, or π with the aerodynamic base, the first disconnection zone (34, 37, 37', 38, 38') being adjacent to the first connection zone (33, 36, 36a, 36b) in a longitudinal direction L.

2. The preform (30, 30', 30") according to the preceding claim, **characterized in that** it comprises a second disconnection zone (38) delimited at least by a second disconnection line (41) extending along the transverse direction and in which the first and second parts (31, 32) are separated from each other, the second disconnection zone (38) being adjacent to the first connection zone (36) along the longitudinal direction L.

3. The preform (30, 30', 30") according to the preceding claim, **characterized in that** the first disconnection zone (37) and the second disconnection zone (38) extend in a same plane (P1).

4. The preform (30, 30', 30") according to claim 2 or 3, **characterized in that** the first and the second disconnection line (39, 41) delimit the first connection zone (36), the second fibrous part (32) being separated along the first and second connection lines so as to form a first structure (32a) and a second structure (32b), the first and second structures being intended to form a first and a second arm (13, 14) of the stiffening elements (11).

5. The preform (30, 30', 30") according to claim 1, **characterized in that** it comprises a second disconnection zone (38') delimited between a fourth and a fifth disconnection line (42, 43) extending along the same first plane (P2) and each along the transverse direction and in which the second fibrous part is separated into a first fibrous structure (32a') and a second fibrous structure (32b') separated from each other along the disconnection zone, the first and second structures being intended to form a first and a second arm (13, 14) of the stiffening elements (11).

6. The preform (30, 30', 30") according to the preceding claim, **characterized in that** the first disconnection zone (37') extends in a second plane (P1) distinct from the first plane (P2), the first and second planes (P1, P2) being superimposed along a radial direction perpendicular to the longitudinal direction.

7. The preform (30, 30', 30") according to one of claims 5 and 6, **characterized in that** the first fibrous structure (32a') and the second fibrous structure (32b') are woven together with the first fibrous part (31) in the first connection zone (36a).

8. The preform (30, 30', 30") according to one of claims 5 to 7, **characterized in that** the first fibrous structure (32a) and the second fibrous structure (32b) are woven together in a third connection zone (44).

9. The preform (30, 30', 30") according to one of claims 5 to 8, **characterized in that** the first fibrous part (31) has a length which is greater along the longitudinal direction than that of the first and second fibrous structures (32a, 32b).

10. A method for manufacturing a composite material fan inter-blade platform (1), the method comprising the following steps:
- weaving a plurality of threads to produce a one-piece preform (30, 30', 30") according to any of the preceding claims,
- shaping the preform at least by unfolding the second fibrous part with respect to the first disconnection line, and
- injecting a matrix into an injection enclosure so as to densify the shaped preform.

11. The method according to the preceding claim, **characterized in that** the weaving step is made flat.

12. The method according to any of claims 10 and 11, **characterized in that** the first and second parts (31, 32) are woven in the same direction.

13. An inter-blade platform (1) for a turbomachine (100) made of a composite material comprising a fibrous reinforcement densified by a matrix, the inter-blade platform (1) being produced by the method according to any one of claims 10 to 12, the platform (1) comprising an aerodynamic base (2) extending along a longitudinal axis and having a radially outer surface (3) intended to form a portion of a radially inner wall of an air inlet aerodynamic duct, and a fixing structure (4) configured so as to allow the platform to be fixed to a rotor disc (113).

14. The inter-blade platform (1) according to the preceding claim, **characterized in that** the stiffening elements (11) have an axial cross-section shaped like a Y.

15. The inter-blade platform (1) according to claim 13, **characterized in that** the stiffening elements (11) and the base (2) of the platform have an axial cross-section shaped like a T.

16. The inter-blade platform (1) according to claim 13, **characterized in that** the stiffeners and the base (2) of the platform have an axial cross-section shaped like a π.
